# EUROPEAN PATENT SPECIFICATION

(11) **EP 4 292 311 B1**
(45) Date of publication and mention of the grant of the patent: **12.08.2026**
(21) Application number: 22752129.1
(22) Date of filing: 25.01.2022
(51) Int. Cl.: H04W 8/18, H04L 67/54, H04W 4/14, H04W 8/08, H04W 60/04, H04W 8/20

(54) **METHOD AND APPARATUS FOR UE REACHABILITY EVENT ENHANCEMENTS**
VERFAHREN UND VORRICHTUNG ZUR VERBESSERUNG VON UE-ERREICHBARKEITSEREIGNISSEN
PROCÉDÉ ET APPAREIL DESTINÉS À DES AMÉLIORATIONS D'ÉVÉNEMENT D'ACCESSIBILITÉ D'UE

(30) Priority: 12.02.2021 WO PCT/CN2021/076636
(43) Date of publication of application: 20.12.2023
(73) Proprietor: Telefonaktiebolaget LM Ericsson (publ), 164 83 Stockholm (SE)
(72) Inventor: Merino VAZQUEZ, Emiliano, 28916 Leganes, Madrid (ES); Dopico SANJUAN, Jose Miguel, 28250 Torrelodones, Madrid (ES); LU, Yunjie, Shanghai 200335 (CN); FERNANDEZ GALMES, Juan Manuel, 28903 Getafe, Madrid (ES); WANG, Cheng, Shanghai 200335 (CN)
(74) Representative: Ericsson
(86) International application number: PCT/CN2022/073742
(87) International publication number: WO 2022/170968

(56) References cited:
- WO-A1-2020/098265
- US-A1- 2013 095 837
- US-A1- 2019 174 449
- NOKIA ET AL: "UE reachability for SMS", vol. SA WG2, no. Online Meeting ;20200420 - 20200424, 10 April 2020 (2020-04-10), XP051874397, Retrieved from the Internet <URL:https://ftp.3gpp.org/tsg_sa/WG2_Arch/TSGS2_138e_Electronic/Docs/S2-2002870.zip S2-2002870 (23.502 UE reachability for SMS).docx> [retrieved on 20200410]
- NTT DOCOMO ET AL: "Stage 3 alignment on UE reachability event", vol. SA WG2, no. Electronic Meeting; 20200819 - 20200902, 8 September 2020 (2020-09-08), XP052433807, Retrieved from the Internet <URL:https://ftp.3gpp.org/tsg_sa/TSG_SA/TSGs_89E_Electronic/Docs/SP-200671.zip 23502_CR2380r1_5GS_Ph1_(Rel-16)_S2-2006187.docx> [retrieved on 20200908]
- NOKIA, NOKIA SHANGHAI BELL, ERICSSON: "UE reachability for SMS", 3GPP DRAFT; S2-2002870, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Online Meeting ;20200420 - 20200424, 10 April 2020 (2020-04-10), Mobile Competence Centre ; 650, route des Lucioles ; F-06921 Sophia-Antipolis Cedex ; France , XP051874397

## Description

### Technical Field

The present disclosure generally relates to wireless communication technology, and more specifically to a method and apparatus for UE reachability event enhancements.

### Background

Cellular Internet of Things (CloT) is a technology which involves Machine-Type Communication devices (MTC device) so that a telecommunications operator may provide other parties/companies their network for different applications.

EF (Exposure Function) is a functional entity which receives the configuration of different monitoring events (e.g. when MTC device becomes reachable) initiated by an Application Server (AS) and via the HSS (Home Subscriber Server) towards the Mobility Management Entity (MME) in 4G Core, or via UDM (User Data Management) towards the Access Management Function (AMF) in 5G Core.

Those MTC devices are monitored for different purposes, e.g. an AS may want to be informed when an MTC Device is reachable/unreachable). This particular event may be useful when the device is in Power Saving Mode (PSM) and the application wants to be alerted when it is about to wake up (or has just woken up) in order to send some data and/or request some data from the application in the device. For similar reasons, the AS may want to be informed when the device is unreachable (i.e. coverage is lost or bad radio conditions occur) so that no communication towards the device is attempted.

Also, for location-based services (LCS), the event comes in handy since GMLC(Gateway Mobile Location Centre) may request to be notified when the UE is reachable to retrieve actively the location/positioning of the UE.

Lastly, for UE device trigger, and Exposure Function may subscribe to UE reachability for SMS to be notified when the UE is reachable and send the UE a device trigger SMS-based.

In brief, there are two existing events for UE reachability:
1) UE reachability for SMS, which is reported by UDM (indirect reporting) and it is a one-time reporting, meaning that when the event is reported, the monitoring/reporting of the event is stopped and the event configuration is deleted from the network; A configuration option is supported that the reporting should be sent only when SMSoNAS (SMS over NAS) is supported (i.e. an SMSF being registered) or when SMSoIP (SMS over IP/IMS) could be supported (i.e. regardless of an SMSF being registered).
2) UE reachability for data, which is reported by the serving node (e.g. AMF) directly, and may be subject to continuous reporting if required, i.e. it is not one-time reporting by nature.

Document NOKIA ET AL: "UE reachability for SMS",3GPP DRAFT; S2-2002870 (XP051874397) discloses a UE Reachability Notification Request procedure.

### Summary

By introducing direct/indirect report flag in event subscription, it enables the event subscriber, e.g. GMLC/NEF, and the event reporting NF, e.g. UDM/AMF, to determine how and who the event report shall be detected and/or reported.

For UE reachability subscription for SMS over IP, UDM also indicates whether SMS over NAS is allowed in the event report, to enable IM-SM-GW to choose most applicable SMS delivery method.

Herein, when the first indicator indicating the first UE reachability event is to be reported in a direct mode, the enumeration value of the first indicator may be set as "DIRECT_REPORT", and it indicates UE reachability is detected in AMF and reported directly to the consumer NF (default behavior). When the first indicator indicating the first UE reachability event is to be reported in an indirect mode, the enumeration value of the first indicator may be set as "INDIRECT_REPORT", and it indicates UE reachability is detected in AMF and the UDM, and reported by the UDM. The UDM shall send reporting of "UE_REACHABILITY_FOR_DATA" to the consumer NF when it receives "UE Reachability for DL Traffic" report or Nudm_UECM_Registration from the AMF (see TS 23.502 clause 4.2.5.3).

Herein, sending from UDM a first UE reachability report has the following two types of description:
1) For "UE_REACHABILITY_FOR_DATA", UE reachability for data, implements the "UE Reachability" monitoring event as specified in clause 4.15.3.1 in 3GPP TS 23.502. When this event is subscribed by an NF service consumer, the UDM subscribes to "ReachabilityReport" event for "UE Reachability for DL Traffic" on the AMF. When this event is subscribed by an NF service consumer, the UDM shall request the AMF to directly send notification to NF, if reachabilityForDataCfg is not present or indicates "DIRECT_REPORT". When this event is subscribed by an NF service consumer and reachabilityForDataCfg indicates "INDIRECT_REPORT", the UDM shall request the AMF to send notification via the UDM. The Event is reported to an NF service consumer by the UDM when a UE Activity notification or Nudm_UECM_Registration is received from AMF.
2) For "UE_REACHABILITY_FOR_SMS", UE reachability for SMS, implements the "UE Reachability for SMS Delivery" event as specified in clause 4.15.3.1 of 3GPP TS 23.502. This Event is reported when an SMSF is being registered in UDM for the UE, or when a UE Activity notification is received from AMF and there is an SMSF already registered for the UE. This Event is also reported when a UE Activity notification or Nudm_UECM_Registration is received from AMF regardless of an SMSF being registered. when the request configuration is for SMS over IP. This event only supports One-Time reporting.

In one embodiment, for the UE reachability report, the definition of type ReachabilityReport may be as follows:

**Table 1**

| Attribute name | Data type | P | Cardinality | Description |
|---|---|---|---|---|
| amfInstanceId | NflnstanceId | O | 1 | The serving AMF which the UE is reachable. |
| accessTypeList | array(AccessType) | O | 1..N | Describes the access type(s) of the UE |
| reachability | UeReachability | O | 0..1 | Describes the reachability of the UE |
| maxAvailabilityTime | DateTime | O | 0..1 | Indicates the time (in UTC) until which the UE is expected to be reachable. |

According to one aspect of the present disclosure, a method implemented by a first network node in a wireless communication system comprises:
receiving a first subscription for subscribing to a UE reachability event from an event subscriber, wherein the first subscription is configured to indicate the UE reachability event shall be reported to the event subscriber via the first network node or a second network node;
sending, to the second network node, a second subscription for subscribing to the UE reachability event, which is configured on the basis of the first subscription; and
if the first subscription is configured to indicate the UE reachability event shall be reported via the first network node, sending, to the event subscriber, a first UE reachability report that the UE reachability event occurs in response to the occurrence of the UE reachability event detected at the first network node or reported by the second network node.

According to another aspect of the present disclosure, a first network node in a communication system is provided, which comprises:
a storage device configured to store a computer program comprising computer instructions; and
a processor coupled to the storage device and configured to execute the computer instructions to carry out the steps as recited above.

According to another aspect of the present disclosure, a method implemented by a second network node in a wireless communication system comprises:
receiving, from a first network node, a second subscription for subscribing to a UE reachability event, wherein the second subscription is configured to indicate the UE reachability event shall be reported to an event subscriber via the first network node or the second network node on the basis of a first subscription received from the event subscriber by the first network node;
determining whether the UE reachability event occurs on the basis of UE activity; and
if the second subscription is configured to indicate the UE reachability event shall be reported to the event subscriber via the first network node, notifying the first network node of the occurrence of the UE reachability event, otherwise, notifying the event subscriber of the occurrence of the UE reachability event.

According to another aspect of the present disclosure, a second network node in a communication system is provided, which comprises:
a storage device configured to store a computer program comprising computer instructions; and
a processor coupled to the storage device and configured to execute the computer instructions to carry out the steps as recited above.

According to another aspect of the present disclosure, a method implemented by an event subscriber in a wireless communication system, comprising:
sending a first subscription for subscribing to a UE reachability event to a first network node, wherein the first subscription is configured to indicate the UE reachability event shall be reported to the event subscriber via the first network node or a second network node;
receiving either a first UE reachability report that the UE reachability event occurs from the first network node, or a second UE reachability report that the UE reachability event occurs from the second network node.

According to another aspect of the present disclosure, an event subscriber in a communication system is provided, which comprises:
a storage device configured to store a computer program comprising computer instructions; and
a processor coupled to the storage device and configured to execute the computer instructions to carry out the steps as recited above.

According to another aspect of the present disclosure, a non-transitory computer readable medium having a computer program stored thereon is provided. When the computer program is executed by a set of one or more processors of a network node in a communication network, the computer program causes the network node to perform steps of the above methods.

In one or more embodiments according to the present disclosure, by simply stating how they want to receive the reporting (either direct or indirect), it allows all types of AFs/GMLCs/NF service consumers to use each UE reachability for data event for the specific purpose. It also enables that both events that are detected at AMF or events that are detected at UDM can be reported as reachability event towards the AFs.

Moreover, it avoid duplicate notifications towards UDM, which might eventually result in duplicate notifications to AF/GMLC if each notification (UECM or Event Exposure) lands at a different UDM and there are race conditions which result in the first UDM resetting the URRP-AMF flag after the second UDM has read it.

Furthermore, it ensures that UDM reports UE reachability event at UECM requests (registration requests) when no event exposure notifications can be sent to UDM (e.g. new AMF does not support event exposure service).

In one or more embodiments according to the present disclosure, in the case of reachability for SMS, it brings additional information for optimized SMS method selection and allows to make a first attempt for SMS delivery with guarantees that the SMS delivery will succeed.

### Brief Description of the Drawings

The present disclosure may be best understood by way of example with reference to the following description and accompanying drawings that are used to illustrate embodiments of the present disclosure. In the drawings:
Fig.1 illustrates a first embodiment according to a method 100 for UE reachability event enhancements;
Fig.2 illustrates a second embodiment according to a method 200 for UE reachability event enhancements;
Fig.3 illustrates a third embodiment according to a method 300 for UE reachability event enhancements;
Fig. 4 is a flow chart illustrating a method for UE Reachability event enhancements according to some embodiments of the present disclosure;
Fig. 5 is a flow chart illustrating a method for UE Reachability event enhancements according to some embodiments of the present disclosure;
Fig. 6 is a flow chart illustrating a method for UE Reachability event enhancements according to some embodiments of the present disclosure;
Fig. 7 is a flow chart illustrating a method for UE Reachability event enhancements according to some embodiments of the present disclosure;
   reachability event.
Fig. 8 schematically illustrates a flowchart of a method for UE reachability enhancement according to one exemplary embodiment of the present disclosure. reachability event.
Fig. 9 schematically illustrates a flowchart of a method for UE reachability enhancement according to another exemplary embodiment of the present disclosure. reachability event.
Fig. 10 schematically illustrates a flowchart of a method for UE reachability enhancement according to another exemplary embodiment of the present disclosure.
Fig. 11 is a block diagram illustrating a network node for delay processing according to some embodiments of the present disclosure;
Fig. 12 is another block diagram illustrating a network node for delay processing according to some embodiments of the present disclosure;
Fig. 13 is another block diagram illustrating a network node for delay processing according to some embodiments of the present disclosure;
Fig. 14 is another block diagram illustrating a network node for delay processing according to some embodiments of the present disclosure; and
Fig. 15 is another block diagram illustrating a network node for delay processing according to some embodiments of the present disclosure.

### Detailed Description

The following detailed description describes a method and apparatus for UE reachability event enhancements. In the following detailed description, numerous specific details such as logic implementations, types and interrelationships of system components, etc. are set forth in order to provide a more thorough understanding of the present disclosure. It should be appreciated, however, by one skilled in the art that the present disclosure may be practiced without such specific details. In other instances, control structures, circuits and instruction sequences have not been shown in detail in order not to obscure the present disclosure. Those of ordinary skill in the art, with the included descriptions, will be able to implement appropriate functionality without undue experimentation.

References in the specification to "one embodiment", "an embodiment", "an example embodiment" etc. indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

Bracketed texts and blocks with dashed borders (e.g., large dashes, small dashes, dot-dash, and dots) may be used herein to illustrate optional operations that add additional features to embodiments of the present disclosure. However, such notation should not be taken to mean that these are the only options or optional operations, and/or that blocks with solid borders are not optional in certain embodiments of the present disclosure.

In the following detailed description and claims, the terms "coupled" and "connected", along with their derivatives, may be used. It should be understood that these terms are not intended as synonyms for each other. "Coupled" is used to indicate that two or more elements, which may or may not be in direct physical or electrical contact with each other, cooperate or interact with each other. "Connected" is used to indicate the establishment of communication between two or more elements that are coupled with each other.

An electronic device stores and transmits (internally and/or with other electronic devices) code (which is composed of software instructions and which is sometimes referred to as computer program code or a computer program) and/or data using machine-readable media (also called computer-readable media), such as machine-readable storage media (e.g., magnetic disks, optical disks, read only memory (ROM), flash memory devices, phase change memory) and machine-readable transmission media (also called a carrier) (e.g., electrical, optical, radio, acoustical or other forms of propagated signals - such as carrier waves, infrared signals). Thus, an electronic device (e.g., a computer) includes hardware and software, such as a set of one or more processors coupled to one or more machine-readable storage media to store code for execution on the set of processors and/or to store data. For instance, an electronic device may include non-volatile memory containing the code since the non-volatile memory can persist code/data even when the electronic device is turned off (when power is removed), and while the electronic device is turned on, that part of the code that is to be executed by the processor(s) of that electronic device is typically copied from the slower non-volatile memory into volatile memory (e.g., dynamic random access memory (DRAM), static random access memory (SRAM)) of that electronic device. Typical electronic devices also include a set of one or more physical interfaces to establish connections (to transmit and/or receive code and/or data using propagating signals) with other electronic devices. One or more parts of an embodiment of the present disclosure may be implemented using different combinations of software, firmware, and/or hardware.

As specified in 3GPP TS 23.502, two UE reachability monitoring events are defined, "UE reachability" and "UE reachability for SMS delivery". The corresponding stage 3 definition in Nudm_EE API are as follows:
"UE_REACHABILITY_FOR_DATA"; and
"UE_REACHABILITY_FOR_SMS".
"UE reachability" monitoring event can be reported by both AMF and UDM:

**Table 2**

| Event | Detection criteria | Which NF detects the event |
|---|---|---|
| UE reachability | Detected when the UE transitions to CM-CONNECTED state or when the UE will become reachable for paging, e.g., Periodic Registration Update timer. It indicates when the UE becomes reachable for sending downlink data to the UE. | AMF, UDM |
| | The AF may provide the following parameters: | |
| | 1)Maximum Latency; | |
| | 2)Maximum Response Time; | |
| | 3) Suggested number of downlink packets. (see NOTE 5). | |

The event reported by UDM could be e.g. at Nudm_UECM_Registration service from AMF. For example, that is used by GMLC to get notified once UE is registered in UDM as defined in 23.273. Or it could be the "UE Reachability for DL Traffic" event reported by AMF to the UDM that UDM has subscribed on behalf of another NF e.g. NEF.

### Problem#1. "Reachability for data" detected and/or reported by UDM

However, it is currently not specified in the TS how and who (e.g. UDM or AMF) could send the event notification for "UE_REACHABILITY_FOR_DATA" to an NF service consumer. For example, GMLC can be expecting the notification coming solely from UDM (since GMLC subscribed to UDM). In view of the current standards, GMLC could be receiving the notifications from either UDM or AMF. It may cause implementation problem in Event subscriber NF ,e.g. NEF, GMLC, on which API/service shall be supported and expected to receive UE reachability event from the reporting NF, e.g. AMF or UDM. In some specific deployments, it could be even not feasible for Event subscriber NF to receive report from the reporting NF, e.g. AMF if it is located in a different PLMN with security barring for notification traffic or there is even no IP connectivity at all etc.

### Problem#2. Duplicated notification

Furthermore, as said above, both Nudm_UECM_Registration sent by AMF that is triggered by UE activity and "UE Reachability for DL Traffic" event reported from AMF in UDM can be treated as UE reachability event that is reported to Event subscriber NF, e.g. NEF. However, when AMF sends UECM registration, AMF is not aware of that request having been served as UE reachability event which would be reported by UDM to Event subscriber NF already. Thereby AMF may send a duplicated UE reachability notification later on via "UE Reachability for DL Traffic" event reporting.

Similar case may happen that UE reachability event can be reported to Event subscriber NF by UDM at Nudm_UECM_Registration that is triggered by IMEI/PEI change detected and sent by AMF. Since AMF is not aware of that, AMF will yet send another "UE Reachability for DL Traffic" event to UDM.

In summary: this result in duplicated notifications towards UDM, and given that the latter notification might be discarded/rejected by UDM since the subscription to UE reachability is no longer active. Again, if there is a rejection, the operator's KPIs might be worsened when there is a 5G core network wrong procedure applied.

### Problem #3 - SMS delivery over 5G NAS fails

If the IP-SM-GW is capable to delivery SMS via both SMS over NAS and SMS over IP, and has a local policy/precedence order to deliver an SMS (this is defined by the network operator), and such local policy/priority is based on "1) try first SMS over 5G-NAS and 2) if not possible, try SMS over IP (IMS-based SMS)".

UDM can report reachability to IP-SM-GW as long as UE reachability detected, e.g. receiving Nudm_UECM_Registration or "UE Reachability for DL Traffic" event reported from AMF, regardless whether or not SMSF is registered in UDM or not.

If UE reachability event is received from UDM and there is no SMSF registered (i.e. 5G-NAS is not possible for SMS delivery), due to lack of information whether SMSF is available in the 5GC, IP-SM-GW will anyway try the delivery of the SMS over NAS first per its local policy and failed, which will cause a reattempt over IMS.

Although the SMS might be delivered anyway, the network operator might observe some statistics/KPIs being tweaked/deviated/worsened due to a wrong 5G core network notification which simply indicates that the UE is reachable for SMS, without any other information which could be valuable for IP-SM-GW.

According to the present disclosure, it may solve the problems by one or more of the following aspects:
- When Event subscriber NF subscribing to reachability for data towards UDM, a new optional indication is included to instruct UDM to report the event (i.e. to request indirect reporting via UDM instead of direct reporting from AMF directly)
- When UDM subscribing to AMF for reachability for data, if UDM received the indication from upstream Event subscriber NF for indirect reporting, UDM will indicate AMF that 1) the subscribing entity is UDM and 2) the notification is to be sent via UDM (indirect reporting)
- When AMF receives the indication from UDM, it shall consider that any UECM request serves as an event report, so that the reporting for the event is not sent again to UDM.

It shall be noted that the new indication from UDM towards AMF is applicable for both scenarios: UDM receiving subscription for reachability for SMS and UDM receiving subscription for reachability for data.
- When UE is detected as reachable for SMS over IP, before reporting the event, UDM shall check if there is an SMSF registered for the UE (i.e. if 5G NAS SMS is possible). If so, it will indicate so in the notification. Additionally, UDM shall indicate the domain detecting the UE reachability and, in the case of EPC, whether the MME supports SMS over NAS. This requires that the HSS, when reporting the event towards UDM, includes such indication (e.g. SMS over 4G NAS supported).

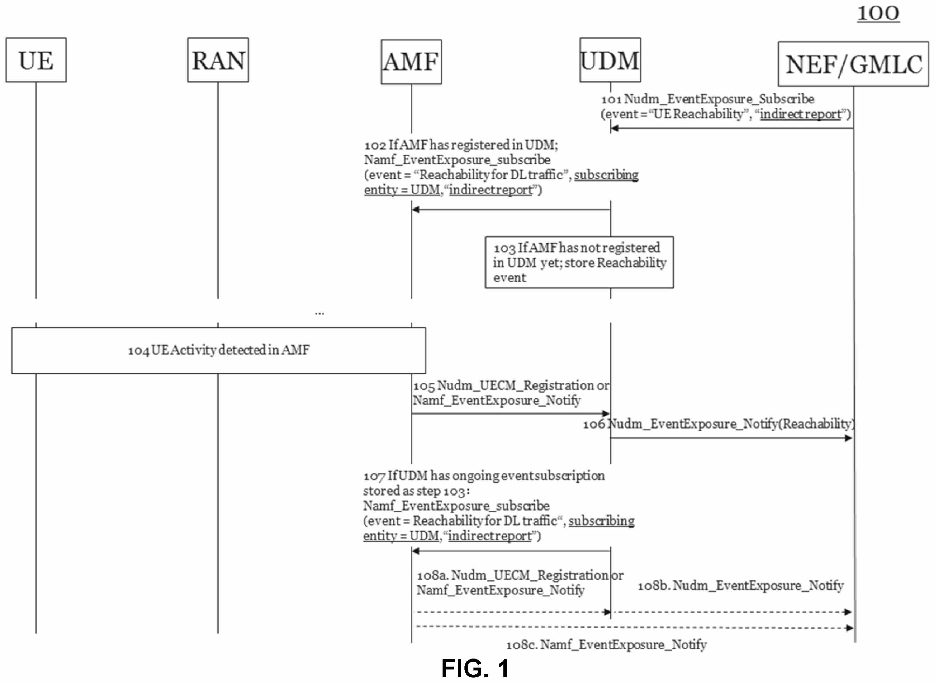

Fig.1 illustrates a first embodiment according to a method 100 for UE reachability event enhancements.

In step 101, Event subscriber NF subscribes to UE reachability event from the UDM via Nudm_EventExposure_Subscribe service operation. In the message, the Event subscriber NF indicates that whether the UE reachability notification shall be detected and sent to the NF by AMF directly i.e. called "direct report" in this disclosure or by UDM i.e. called "indirect report" in this document. It should be noted that, in this example, the direct/indirect report flag is set for UE reachability event. The flag might be applied for other notification events supported by UDM. Herein, the flag is set as "indirect report".

In step 102, UDM subscribes to AMF for UE reachability event. Since indirect report flag is received, UDM includes in the message its own address for indirect reporting and indicates that 1) the subscribing entity is UDM and 2) the notification is to be sent via UDM (indirect reporting). UDM may also set URRP (UE Reachability Request Parameter, indicating that UE reachability notification from AMF has been subscribed by the UDM) whenever applicable, e.g. in case one-time report is requested by the event subscriber NF in step 101.

Herein, in one embodiment, the description of URRP may be as follows:

**Table 3**

| Attribute name | Data type | P | Cardinality | Description |
|---|---|---|---|---|
| urrpIndicator | boolean | O | 0..1 | This IE indicates whether |
| | | | | "UE_REACHABILITY_FOR_SMS |
| | | | | " event or |
| | | | | "UE_REACHABILITY_FOR_DA TA" event for One-Time UE Activity notification (i.e. Max Number Of reports =1) with configuration |
| | | | | "INDIRECT_REPORT" for this user has been subscribed or not: |
| | | | | - true: the event has been subscribed |
| | | | | - false, or absence of this attribute: the event for this user is currently not subscribed |

When AMF receives the above indications from UDM, it shall consider that any UECM request e.g. Nudm_UECM_Registration serves as an event report, so that the reporting for the event e.g. Namf_EventExposure_Notify is not needed to be sent again to UDM.

AMF may also set URRP whenever applicable, e.g. in case one-time report is requested.

In step 103, if there is no AMF registered in UDM, UDM stores the event subscription. The event subscription being stored would be sent in step 107 later.

In step 104, AMF detects UE activity, e.g. AMF receives (N1) NAS signaling from the UE or UE Notification or a (N2) Path Switch Request from NG-RAN. See details of UE activity detection in AMF at step 101 of clause 4.2.5.3 in TS 23.502. AMF may also detect IMSI/PEI change from the UE.

In step 105, As per UE activity detected in AMF as step 104 (i.e. conditions reached to report UE reachability from AMF), and UE reachability event is subscribed with indirect report being indicated by UDM in step 102

If Nudm_UECM service operation e.g. Nudm_UECM_Registration is triggered in AMF at this time, AMF shall consider this also as UE reachability having been reported to UDM, i.e. no new Namf_EventExposure_Notify message needed to be sent to UDM. AMF may also clean up local resource reserved for UE reachability event that is subscribed as per step 102.

If Nudm_UECM service operation is not triggered, AMF shall send Namf_EventExposure_Notify message to UDM based on the parameters received in step 102.

AMF may also clean URRP whenever applicable, e.g. in case it is set in step102.

In step 106, when UDM receives Nudm_UECM service operation or Namf_EventExposure_Notify from AMF, UDM send UE reachability report to the Event subscriber NF if indirect report is indicated in step 101. UDM may also clean URRP whenever applicable, e.g. if it is set in step 102.

In step 107-108, when UDM receives Nudm_UECM service operation and there is ongoing even subscription stored in step 103 UDM can repeat procedure as step 102-106 above.

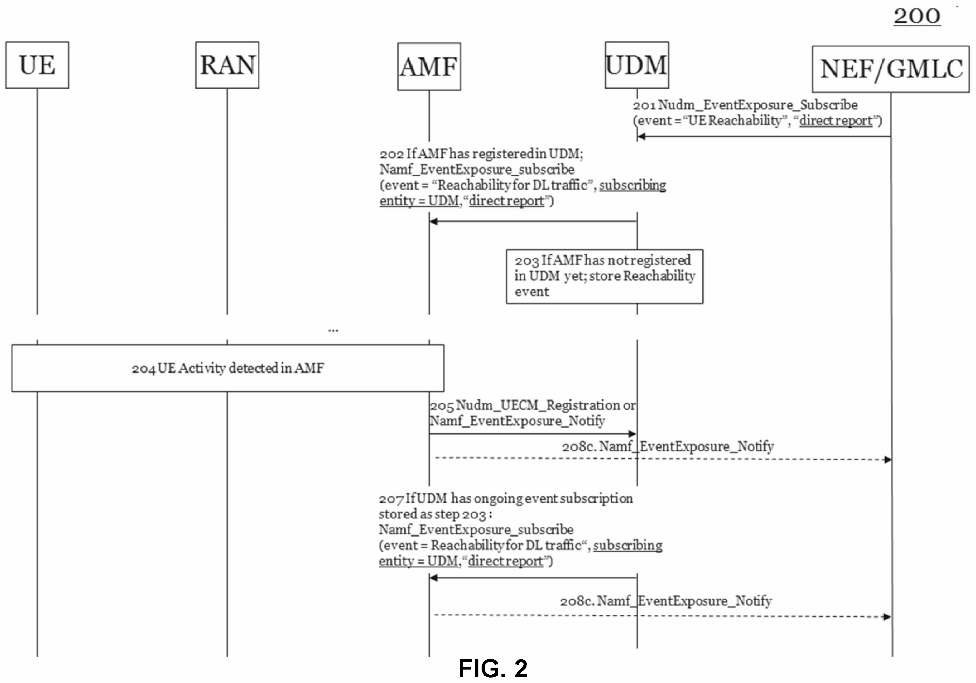

Fig.2 illustrates a second embodiment according to a method 200 for UE reachability event enhancements.

In step 201, Event subscriber NF subscribes to UE reachability event from the UDM via Nudm_EventExposure_Subscribe service operation. In the message, the Event subscriber NF indicates that whether the UE reachability notification shall be detected and sent to the NF by AMF directly i.e. called "direct report" in this document or by UDM i.e. called "indirect report" in this document. It should be noted that, in this example, the direct/indirect report flag is set for UE reachability event. The flag might be applied for other notification events supported by UDM. Herein, the flag is set as "direct report".

In step 202, UDM subscribes to AMF for UE reachability event. Since indirect report flag is received, UDM includes in the message its own address for indirect reporting and indicates that 1) the subscribing entity is UDM and 2) the notification is to be sent via UDM (indirect reporting). UDM may also set URRP (UE Reachability Request Parameter, indicating that UE reachability notification from AMF has been subscribed by the UDM) whenever applicable, e.g. in case one-time report is requested by the event subscriber NF in step 201.

When AMF receives the above indications from UDM, it shall consider that any UECM request e.g. Nudm_UECM_Registration serves as an event report, so that the reporting for the event e.g. Namf_EventExposure_Notify is not needed to be sent again to UDM.

AMF may also set URRP whenever applicable, e.g. in case one-time report is requested.

In step 203, if there is no AMF registered in UDM, UDM stores the event subscription. The event subscription being stored would be sent in step 207 later.

In step 204, AMF detects UE activity, e.g. AMF receives (N1) NAS signaling from the UE or UE Notification or a (N2) Path Switch Request from NG-RAN. See details of UE activity detection in AMF at step 201 of clause 4.2.5.3 in TS 23.502. AMF may also detect IMSI/PEI change from the UE.

In step 205, As per UE activity detected in AMF as step 204 (i.e. conditions reached to report UE reachability from AMF), and UE reachability event is subscribed with indirect report being indicated by UDM in step 202

If Nudm_UECM service operation e.g. Nudm_UECM_Registration is triggered in AMF at this time, AMF shall consider this also as UE reachability having been reported to UDM, i.e. no new Namf_EventExposure_Notify message needed to be sent to UDM. AMF may also clean up local resource reserved for UE reachability event that is subscribed as per step 202.

If Nudm_UECM service operation is not triggered, AMF shall send Namf_EventExposure_Notify message to UDM based on the parameters received in step 202.

AMF may also clean URRP whenever applicable, e.g. in case it is set in step 202.

In step 208c, AMF sending an Event Exposure notification to the Event Subscriber NEF/GMLC..

In step 207-208c, when UDM receives Nudm_UECM service operation and there is ongoing even subscription stored in step 203 UDM can repeat procedure as step 202-206 above.

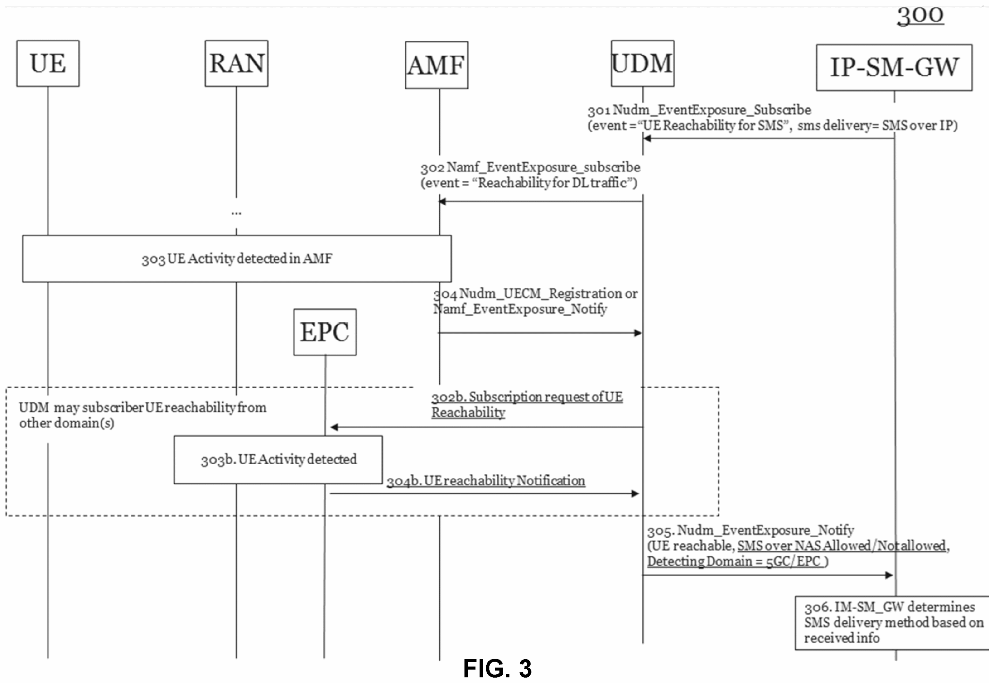

Fig.3 illustrates a third embodiment according to a method 300 for UE reachability event enhancements.

In step 301, event subscriber NF, e.g. IM-SM_GW, subscribes to UE reachability event for SMS from the UDM via Nudm_EventExposure_Subscribe service operation, the SMS delivery is set as "SMS over IP".

The IP-SM-GW is anyway capable to delivery SMS via both SMS over NAS and SMS over IP, and has a local policy/precedence order to deliver an SMS , e.g. 1) try first SMS over 5G-NAS and 2) if not possible, try SMS over IP (IMS-based SMS)".

In step 302, UDM subscribes to AMF for UE reachability event. If there is no AMF registered in UDM, UDM stores the event subscription.

In step 303, AMF detects UE activity, e.g. AMF receives (N1) NAS signaling from the UE or UE Notification or a (N2) Path Switch Request from NG-RAN. See details of UE activity detection in AMF at step 301 of clause 4.2.5.3 in TS 23.502.

In step 304, UDM receives UE reachability via either 1) UE activity detected in AMF as step 303 and Namf_EventExposure_Notify message was sent to UDM; or 2) Nudm_UECM service operation e.g. Nudm_UECM_Registration is triggered by AMF.

In step 302b, UDM can also request UE Reachability Notification in other domains, e.g. EPC or 2G/3G network. For example, UDM may send subscribe request for UE reachability for IP to HSS in EPC domain.

In step 303b, HSS detects UE activity via domain specific method, e.g. HSS requests to be notified by the reachability of the UE at EPC NAS level via "UE Reachability Notification Request" and "UE Activity Notification" procedures as defined in clause 5.3.11 of TS 23.401.

In step 304b, HSS sends UE Reachability Notification to UDM.

In step 305, when UDM receives UE reachability from step 304 or step 304b, UDM send UE reachability report to the Event subscriber NF.

In the UE reachability report, UDM can also indicate in which domains the UE reachability is detected, e.g. in 5GC (as of step 304) or EPC (as of step 304b).

If "SMS over IP" is indicated in the event subscription of step 301, UDM checks if SMSF is registered. If yes, UDM indicates that SMS over NAS is allowed in the UE reachability report. Otherwise UDM indicates that SMS over NAS is not allowed in the UE reachability report.

In step 306, when Event subscriber NF, e.g.IM-SM_GW, receives UE reachability report.

If in which domains the UE reachability is detected is indicated in the UE reachability report, IM-SM_GW determines, for the following SMS delivery procedures, to request the routing information of the SMS serving node (e.g. MME, SGSN, SMSF) specific for that domain.

IM-SM_GW can determine to whether or not SMS delivery shall be attempted via SMS over NAS first as per the local policy of step 301 and the SMS over NAS indication included in the UE reachability report of step 305.

The present disclosure allows all types of AFs/GMLCs, /NF service consumers to use each UE reachability for data event for the specific purpose, by simply stating how they want to receive the reporting (either direct or indirect). It also enables that both events that are detected at AMF or events that are detected at UDM can be reported as reachability event towards the AFs.

The present disclosure avoid duplicate notifications towards UDM, which might eventually result in duplicate notifications to AF/GMLC if each notification (UECM or Event Exposure) lands at a different UDM and there are race conditions which result in the first UDM resetting the URRP-AMF flag after the second UDM has read it.

The solution ensures that UDM reports UE reachability event at UECM requests (registration requests) when no event exposure notifications can be sent to UDM (e.g. new AMF does not support event exposure service).
- In the case of reachability for SMS, it brings additional information for optimized SMS method selection and allows making a first attempt for SMS delivery with guarantees that the SMS delivery will succeed.

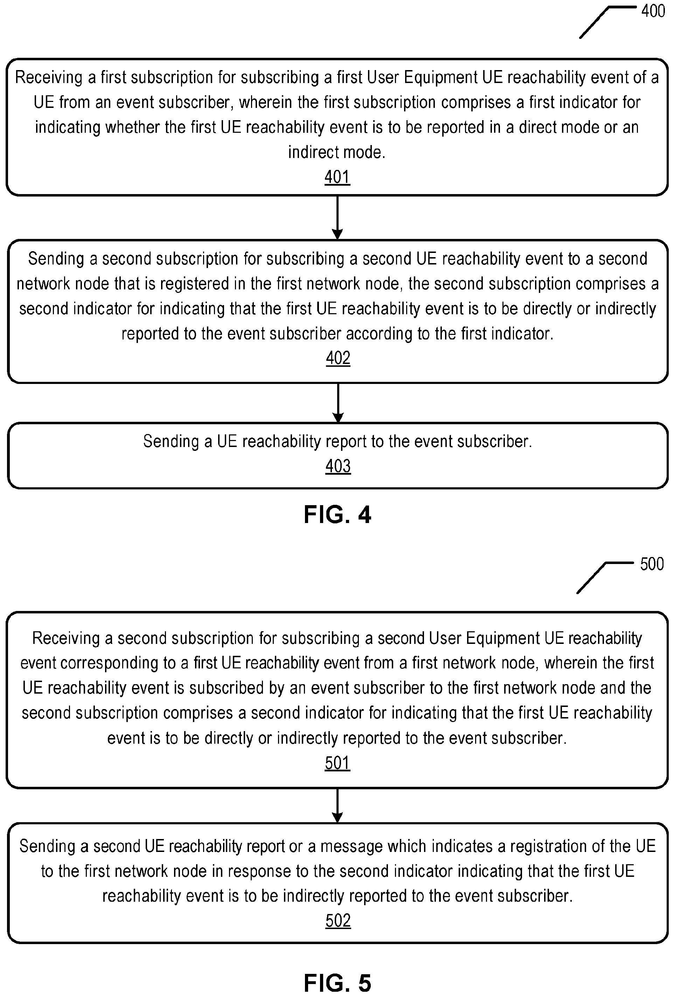

Fig. 4 is a flow chart illustrating a method 400 for UE Reachability event enhancements according to some embodiments of the present disclosure. The method 400 may be performed in a network node by way of example only but it is not limited thereto.

In one embodiment, the method 400 may begin with receiving a first subscription for subscribing a first User Equipment UE reachability event of a UE from an event subscriber, wherein the first subscription comprises a first indicator for indicating whether the first UE reachability event is to be reported in a direct mode or an indirect mode (block 401). Then, sending a second subscription for subscribing a second UE reachability event to a second network node that is registered in the first network node, the second subscription comprises a second indicator for indicating that the first UE reachability event is to be directly or indirectly reported to the event subscriber according to the first indicator (block 402). At last, sending a first UE reachability report to the event subscriber (block 403).

As a further example, the second indicator indicates that the second UE reachability event is to be indirectly reported to the event subscriber via the first network node when the first indicator indicates the indirect mode, or directly reported to the event subscriber via the second network node when the first indicator indicates the direct mode.

As a further example, the sending a first UE reachability report to the event subscriber further comprising: sending the first UE reachability report to the event subscriber in response to receiving from the second network node a second UE reachability report of the second UE reachability event or a message which indicates a registration of the UE.

As a further example, the first subscription for a first UE reachability event comprises a one-time first UE reachability event subscription or a continuous/periodic first UE reachability event subscription.

As a further example, in a case of the first subscription for a first UE reachability event being a one-time first UE reachability event subscription, the method further comprises: setting a UE Reachability Request Parameter URRP so as to indicate that the second UE reachability event has been subscribed by the first network node towards the second network node.

As a further example, the method 400 further comprises the following steps: storing the second subscription when no second network node is registered in the first network node; and wherein sending a second subscription for subscribing a second UE reachability event to a second network node comprises sending the stored second subscription to a second network node only if the second network node is registered in the first network node.

As a further example, the first UE reachability report is in response to the first subscription for subscribing the first UE reachability event, and the second UE reachability report is in response to the second subscription for subscribing the second UE reachability event.

Fig. 5 is a flow chart illustrating a method 500 for UE Reachability event enhancements according to some embodiments of the present disclosure. The method 500 may be performed in a network node by way of example only but it is not limited thereto.

In one embodiment, the method 500 may begin with receiving a second subscription for subscribing a second User Equipment UE reachability event corresponding to a first UE reachability event from a first network node, wherein the first UE reachability event is subscribed by an event subscriber to the first network node and the second subscription comprises a second indicator for indicating that the first UE reachability event is to be directly or indirectly reported to the event subscriber (block 501). Then, sending a second UE reachability report or a message which indicates a registration of the UE to the first network node in response to the second indicator indicating that the first UE reachability event is to be indirectly reported to the event subscriber (block 502).

As a further example, the method further comprising: setting a UE Reachability Request Parameter URRP so as to indicate that second UE reachability event has been subscribed by the first network node.

As a further example, the receiving a second subscription for subscribing a second UE reachability event corresponding to a first UE reachability event from a first network node comprises: receiving the subscription after the second network node is registered in the first network node.

As a further example, the second UE reachability report is in response to the second subscription for subscribing the second UE reachability event.

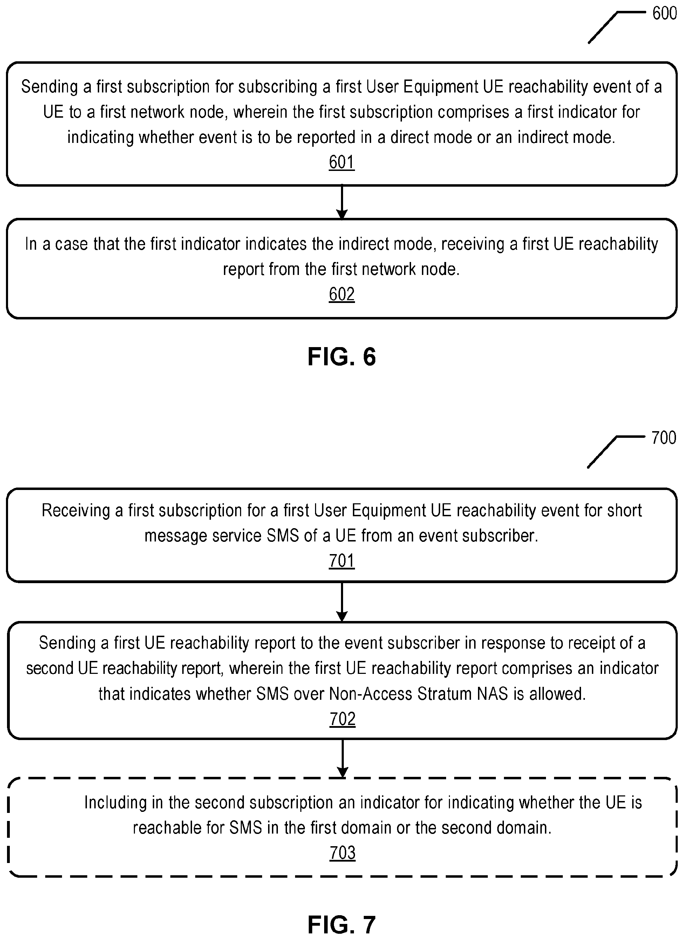

Fig. 6 is a flow chart illustrating a method 600 for UE Reachability event enhancements according to some embodiments of the present disclosure. The method 600 may be performed in a network node by way of example only but it is not limited thereto.

In one embodiment, the method 600 may begin with sending a first subscription for subscribing a first User Equipment UE reachability event of a UE to a first network node, wherein the first subscription comprises a first indicator for indicating whether event is to be reported in a direct mode or an indirect mode (block 601), Then, in a case that the first indicator indicates the indirect mode, receiving a first UE reachability report from the first network node (block 602).

As a further example, the method further comprising: in a case that the first indicator indicates the direct mode receiving a first UE reachability report from a second network node.

As a further example, the first UE reachability report is in response to the first subscription for subscribing the first UE reachability event.

Fig. 7 is a flow chart illustrating a method 700 for UE Reachability event enhancements according to some embodiments of the present disclosure. The method 700 may be performed in a network node by way of example only but it is not limited thereto.

In one embodiment, the method 700 may begin with receiving a first subscription for a first User Equipment UE reachability event for short message service SMS of a UE from an event subscriber (block 701). Then, sending a first UE reachability report to the event subscriber in response to receipt of a second UE reachability report, wherein the first UE reachability report comprises an indicator that indicates whether SMS over Non-Access Stratum NAS is allowed (block 702). In addition, the second UE reachability report is received from a first domain or a second domain, and the method further comprises: including in the second subscription an indicator for indicating whether the UE is reachable for SMS in the first domain or the second domain (block 703). Block 703 is an optional step of the method.

As a further example, before sending the first UE reachability report and when the first subscription indicates that the UE is reachable for SMS over IP, the method further comprising: checking whether a SMS function is registered for the UE; and indicating SMS over NAS is allowed in the first UE reachability report in response to the SMS function is registered.

As a further example, the method further comprises: sending a second subscription for subscribing a second UE reachability event in a first domain and a second domain.

As a further example, the second UE reachability report is received from a first domain or a second domain, and the method further comprises: including in the second subscription an indicator for indicating whether the UE is reachable for SMS in the first domain or the second domain.

As a further example, the first UE reachability report is in response to a first subscription for subscribing a first UE reachability event, and the second UE reachability report is in response to a second subscription for subscribing a second UE reachability event.

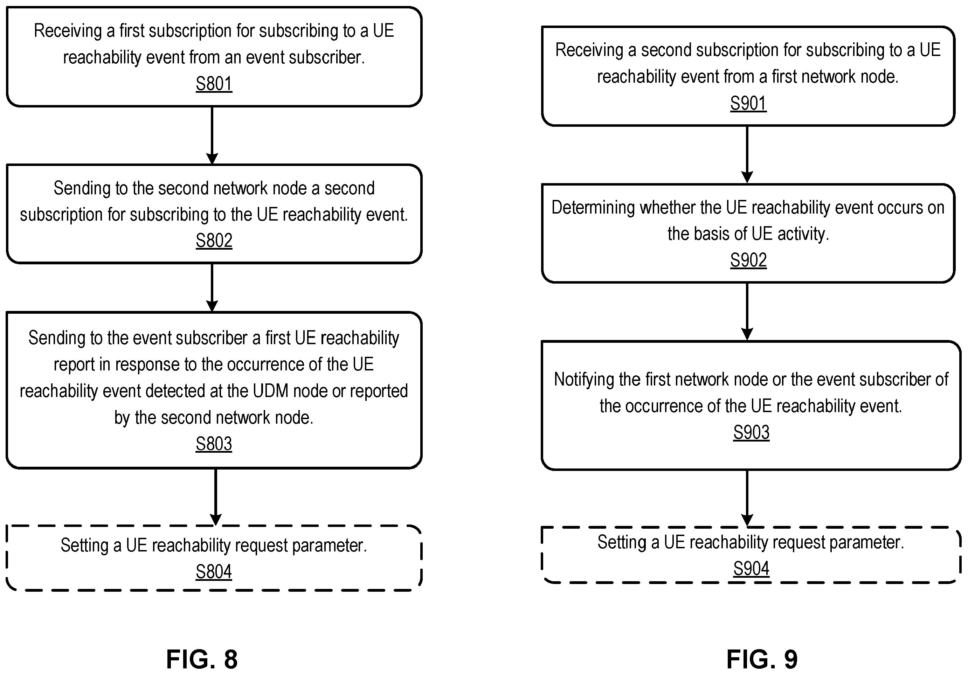

Fig. 8 schematically illustrates a flowchart of a method for UE reachability enhancement according to one exemplary embodiment of the present disclosure. For illustrative purpose, it assumes the method steps as shown in Fig. 8 are carried out at an UDM node.

With reference to Fig. 8, at step S801, an UDM node receives a first subscription for subscribing to a UE reachability event from an event subscriber, e.g., GMLC node, an IP-SM-GW node, an EF node or an AF node. As an example, the first subscription is configured to indicate the UE reachability event shall be reported to the event subscriber via the UDM node or a second network node, e.g., AMF node or HSS node.

Then, at step S802, the UDM node sends, to the second network node, a second subscription for subscribing to the UE reachability event. Herein, the UE reachability event is configured on the basis of the first subscription.

At step S803, if the first subscription is configured to indicate the UE reachability event shall be reported via the UDM node, the UDM node sends, to the event subscriber, a first UE reachability report that the UE reachability event occurs in response to the occurrence of the UE reachability event detected at the UDM node or reported by the second network node.

Optionally, the process proceeds to step S804 where the UDM node sets a UE reachability request parameter to make the second network node to report the occurrence of the UE reachability event in one of the following modes: one-time UE reachability event reporting, continuous UE reachability event reporting and periodic UE reachability event reporting.

Alternatively, the UE reachability event comprises at least one of an event on UE reachability for data and an event on UE reachability for SMS.

Alternatively, if the first subscription is configured to indicate the UE reachability event shall be reported via the UDM node, the second subscription is configured to at least comprise an address of the UDM node, an indicator for indicating a type of the UE reachability event and an indicator for indicating the UE reachability event shall be only reported via the UDM node.

Alternatively, if the first subscription is configured to indicate the UE reachability event shall be reported via the second network node, the second subscription is configured to comprise an indicator for indicating the UE reachability event shall be reported via the second network node.

Alternatively, if the first subscription is configured to indicate the UE reachability event shall be reported by the UDM node, the step of sending the second subscription comprises:
if there is an AMF node registered in the UDM node, sending the second subscription to the AMF node registered in the UDM node.

Alternatively, the step of sending the first UE reachability report comprises:
in response to a UECM request or an event exposure notification that UE activity is detected, which is received from the AMF node registered in the UDM node, sending the first UE reachability report to the event subscriber.

Alternatively, if the first subscription is configured to indicate the UE reachability event shall be reported by the UDM node, the step of sending the second subscription comprises:
if there is no AMF node registered in the UDM node, storing the first subscription at the UDM node, and
in response to a UECM request or an event exposure notification that UE activity is detected, which is received from an AMF node, sending the second subscription to the AMF node.

Alternatively, the UE reachability for SMS comprises UE reachability for SMS over NAS and UE reachability for SMS over IF.

Alternatively, the first subscription is configured to further indicate the UE reachability for SMS is the SMS over IP, and the step of sending the first UE reachability report comprises:
in response to the occurrence of the UE reachability event detected at the first network node or reported by the second network node, determining whether the SMS over NAS is available;
configuring the first UE reachability report to indicate whether the SMS over NAS is available.

Alternatively, the first UE reachability report is configured to further indicate in which domain the occurrence of the UE reachability event is detected.

Fig. 9 schematically illustrates a flowchart of a method for UE reachability enhancement according to another exemplary embodiment of the present disclosure. For illustrative purpose, it assumes the method steps as shown in Fig. 9 are carried out at an AMF node or HSS node.

With reference to Fig. 9, at step S901, a second network node, e.g., the AMF node or HSS node, receives, from a first network node, e.g., UDM node, a second subscription for subscribing to a UE reachability event. As an example, the second subscription is configured to indicate the UE reachability event shall be reported to an event subscriber, e.g., GMLC node, an IP-SM-GW node, an EF node or an AF node, via the first network node or the second node on the basis of a first subscription received from the event subscriber by the first network node.

Then, at step S902, the second network node, e.g., the AMF node or HSS node, determines whether the UE reachability event occurs on the basis of UE activity.

At step S903, if the second subscription is configured to indicate the UE reachability event shall be reported to the event subscriber via the first network node, the second network node notifies the first network node of the occurrence of the UE reachability event, otherwise, notifies the event subscriber of the occurrence of the UE reachability event.

Optionally, the process proceeds to step S904 where the second network node sets a UE reachability request parameter to make the second network node to report the occurrence of the UE reachability event in one of the following modes: one-time UE reachability event reporting, continuous UE reachability event reporting and periodic UE reachability event reporting.

Alternatively, the UE reachability event comprises at least one of an event on UE reachability for data and an event on UE reachability for SMS.

Alternatively, the step of determining whether the UE reachability event occurs is performed by detecting at least one selected from a group consisting of NAS signaling from a UE, UE notification, a path switch request from NG-RAN and an IMSI/PEI change from a UE.

Alternatively, the step of notifying the first network node of the occurrence of the UE reachability event is performed by sending either a UECM request or an event exposure notification to the first network node.

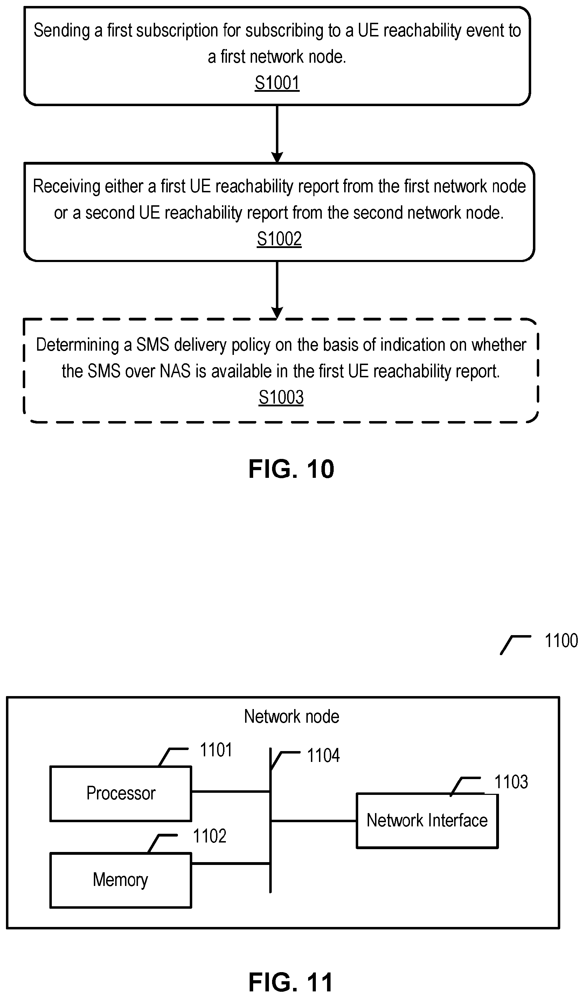

Fig. 10 schematically illustrates a flowchart of a method for UE reachability enhancement according to another exemplary embodiment of the present disclosure. For illustrative purpose, it assumes the method steps as shown in Fig. 10 are carried out at an event subscriber, e.g., GMLC node, an IP-SM-GW node, an EF node or an AF node.

With reference to Fig. 10, at step S1001, the event subscriber sends a first subscription for subscribing to a UE reachability event to a first network node, e.g., a UDM node. As an example, the first subscription is configured to indicate the UE reachability event shall be reported to the event subscriber via the first network node or a second network node, e.g., an AMF node or HSS node.

Then, at step S1002, the event subscriber receives either a first UE reachability report that the UE reachability event occurs from the first network node, or a second UE reachability report that the UE reachability event occurs from the second network node.

Optionally, the process proceeds to step S1003 where the event subscriber determines a SMS delivery policy on the basis of indication on whether the SMS over NAS is available in the first UE reachability report.

Alternatively, the UE reachability event comprises at least one of an event on UE reachability for data and an event on UE reachability for SMS.

Alternatively, the UE reachability for SMS comprises UE reachability for SMS over NAS and UE reachability for SMS over IP.

Alternatively, the first subscription is configured to further indicate the UE reachability for SMS is the SMS over IP, the first UE reachability report is configured to indicated whether the SMS over NAS is available.

Alternatively, the first UE reachability report is configured to further indicate in which domain the occurrence of the UE reachability event is detected.

Fig. 11 is a block diagram illustrating a network node 1100 according to some embodiments of the present disclosure. It should be appreciated that the network node 1100 may be implemented using components other than those illustrated in Fig. 11.

With reference to Fig. 11, the network node 1100 may comprise at least a processor 1101, a memory 1102, an interface 1103 and a communication medium 1104. The processor 1101, the memory 1102 and the interface 1103 may be communicatively coupled to each other via the communication medium 1104.

The processor 1101 may include one or more processing units. A processing unit may be a physical device or article of manufacture comprising one or more integrated circuits that read data and instructions from computer readable media, such as the memory 1102, and selectively execute the instructions. In various embodiments, the processor 1101 may be implemented in various ways. As an example, the processor 1101 may be implemented as one or more processing cores. As another example, the processor 1101 may comprise one or more separate microprocessors. In yet another example, the processor 1101 may comprise an application-specific integrated circuit (ASIC) that provides specific functionality. In still another example, the processor 1101 may provide specific functionality by using an ASIC and/or by executing computer-executable instructions.

The memory 1102 may include one or more computer-usable or computer-readable storage medium capable of storing data and/or computer-executable instructions. It should be appreciated that the storage medium is preferably a non-transitory storage medium.

The interface 1103 may be a device or article of manufacture that enables the network node 1100 to send data to or receive data from external devices.

The communication medium 1104 may facilitate communication among the processor 1101, the memory 1102 and the interface 1103. The communication medium 1104 may be implemented in various ways. For example, the communication medium 1104 may comprise a Peripheral Component Interconnect (PCI) bus, a PCI Express bus, an accelerated graphics port (AGP) bus, a serial Advanced Technology Attachment (ATA) interconnect, a parallel ATA interconnect, a Fiber Channel interconnect, a USB bus, a Small Computing System Interface (SCSI) interface, or another type of communications medium.

In the example of Fig. 11, the instructions stored in the memory 1102 may include those that, when executed by the processor 1101, cause the network node 1100 to implement the method described with respect to Figs. 4-10.

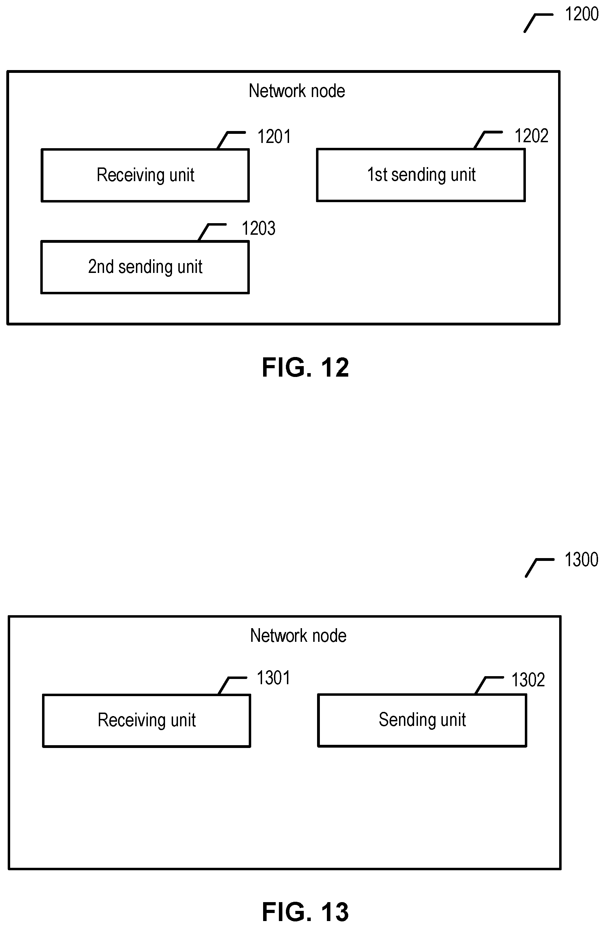

Fig. 12 is another block diagram illustrating a network node 1200 according to some embodiments of the present disclosure. It should be appreciated that the network node 1200 may be implemented using components other than those illustrated in Fig. 12.

With reference to Fig. 12, the network node 1200 may comprise at least a receiving unit 1201, a first sending unit 1202 and a second receiving unit 1203. The receiving unit 1201 may be adapted to perform at least the operation described in the block 401 of Fig. 4. The first sending unit 1202 may be adapted to perform at least the operation described in the block 402 of Fig. 4. The second receiving unit 1203 may be adapted to perform at least the operation described in the block 403 of Fig. 4.

Fig. 13 is another block diagram illustrating a network node 1300 according to some embodiments of the present disclosure. It should be appreciated that the network node 1300 may be implemented using components other than those illustrated in Fig. 13.

With reference to Fig. 13, the network node 1300 may comprise at least a receiving unit 1301 and a sending unit 1302. The selection unit 1301 may be adapted to perform at least the operation described in the block 501 of Fig. 5. The first sending unit 1302 may be adapted to perform at least the operation described in the block 502 of Fig. 5.

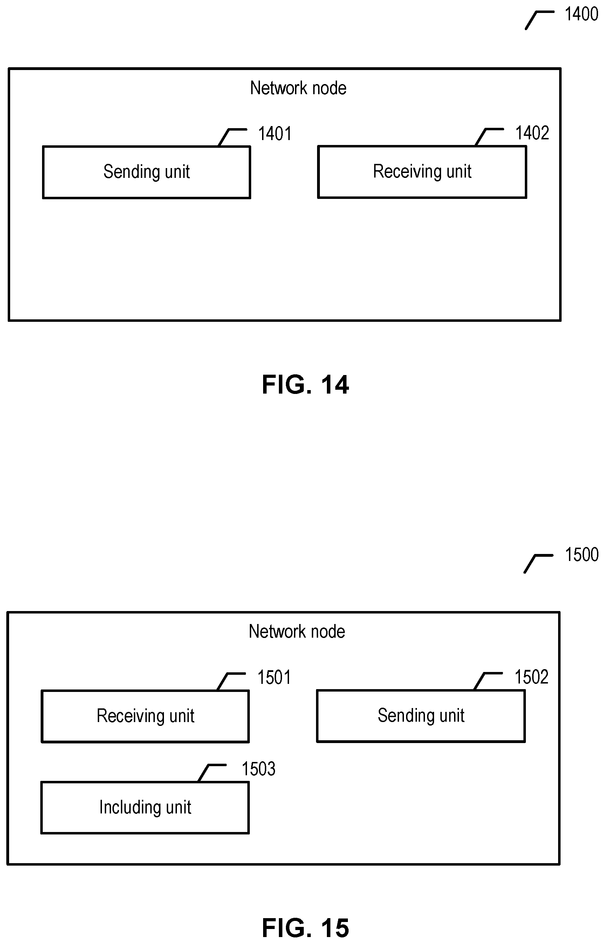

Fig. 14 is another block diagram illustrating a network node 1400 according to some embodiments of the present disclosure. It should be appreciated that the network node 1400 may be implemented using components other than those illustrated in Fig. 14.

With reference to Fig. 14, the network node 1400 may comprise at least a sending unit 1401 and a receiving unit 1402. The sending unit 1401 may be adapted to perform at least the operation described in the block 601 of Fig. 6. The receiving unit 1102 may be adapted to perform at least the operation described in the block 602 of Fig. 6.

Fig. 15 is another block diagram illustrating a network node 1500 according to some embodiments of the present disclosure. It should be appreciated that the network node 1500 may be implemented using components other than those illustrated in Fig. 15.

With reference to Fig. 15, the network node 1500 may comprise at least a receiving unit 1501, a sending unit 1502 and an including unit 1503. The receiving unit 1501 may be adapted to perform at least the operation described in the block 701 of Fig. 7. The first sending unit 1502 may be adapted to perform at least the operation described in the block 702 of Fig. 7. The second receiving unit 1503 may be adapted to perform at least the operation described in the block 703 of Fig. 7.

Some units are illustrated as separate units in Figs. 12-15. However, this is merely to indicate that the functionality is separated. The units may be provided as separate elements. However, other arrangements are possible, e.g., some of them may be combined as one unit. Any combination of the units may be implemented in any combination of software, hardware, and/or firmware in any suitable location. For example, there may be more controllers configured separately, or just one controller for all of the components.

The units shown in Figs. 12-15 may constitute machine-executable instructions embodied within e.g. a machine readable medium, which when executed by a machine will cause the machine to perform the operations described. Besides, any of these units may be implemented as hardware, such as an application specific integrated circuit (ASIC), Digital Signal Processor (DSP), Field Programmable Gate Array (FPGA) or the like.

Moreover, it should be appreciated that the arrangements described herein are set forth only as examples. Other arrangements (e.g., more controllers or more detectors, etc.) may be used in addition to or instead of those shown, and some units may be omitted altogether. Functionality and cooperation of these units are correspondingly described in more detail with reference to Figs. 4-10.

Some portions of the foregoing detailed description have been presented in terms of algorithms and symbolic representations of transactions on data bits within a computer memory. These algorithmic descriptions and representations are ways used by those skilled in the signal processing arts to most effectively convey the substance of their work to others skilled in the art. An algorithm is here, and generally, conceived to be a self-consistent sequence of transactions leading to a desired result. The transactions are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be appreciated, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "processing" or "computing" or "calculating" or "determining" or "displaying" or the like, refer to actions and processes of a computer system, or a similar electronic computing device, that manipulates and transforms data represented as physical (electronic) quantities within the computer system's registers and memories into other data similarly represented as physical quantities within the computer system memories or registers or other such information storage, transmission or display devices.

The algorithms and displays presented herein are not inherently related to any particular computer or other apparatus. Various general-purpose systems may be used with programs in accordance with the teachings herein, or it may prove convenient to construct more specialized apparatus to perform the required method transactions. The required structure for a variety of these systems will appear from the description above. In addition, embodiments of the present disclosure are not described with reference to any particular programming language. It should be appreciated that a variety of programming languages may be used to implement the teachings of embodiments of the present disclosure as described herein.

An embodiment of the present disclosure may be an article of manufacture in which a non-transitory machine-readable medium (such as microelectronic memory) has stored thereon instructions (e.g., computer code) which program one or more signal processing components (generically referred to here as a "processor") to perform the operations described above. In other embodiments, some of these operations might be performed by specific hardware components that contain hardwired logic (e.g., dedicated digital filter blocks and state machines). Those operations might alternatively be performed by any combination of programmed signal processing components and fixed hardwired circuit components.

In the foregoing detailed description, embodiments of the present disclosure have been described with reference to specific exemplary embodiments thereof. It will be evident that various modifications may be made thereto without departing from the scope of the present disclosure as set forth in the following claims. The specification and drawings are, accordingly, to be regarded in an illustrative sense rather than a restrictive sense.

Throughout the description, some embodiments of the present disclosure have been presented through flow diagrams. It should be appreciated that the order of transactions and transactions described in these flow diagrams are only intended for illustrative purposes and not intended as a limitation of the present disclosure. One having ordinary skill in the art would recognize that variations can be made to the flow diagrams without departing from the scope of the present disclosure as set forth in the following claims.

## Claims

1. A method implemented by a first network node in a wireless communication system, comprising:
receiving a first subscription for subscribing to a UE reachability event from an event subscriber, wherein the first subscription is configured to indicate the UE reachability event shall be reported to the event subscriber via the first network node or a second network node;
sending, to the second network node, a second subscription for subscribing to the UE reachability event, which is configured on the basis of the first subscription; and
if the first subscription is configured to indicate the UE reachability event shall be reported via the first network node, sending, to the event subscriber, a first UE reachability report that the UE reachability event occurs in response to the occurrence of the UE reachability event detected at the first network node or reported by the second network node.

2. The method of claim 1, wherein the first network node is implemented by a UDM node, the second network node is implemented by an AMF node or an HSS node, and the event subscriber is implemented by one selected from a group consisting of a GMLC node, an IP-SM-GW node, an EF node and an AF node.

3. The method of claim 1 or 2, wherein the UE reachability event comprises at least one of an event on UE reachability for data and an event on UE reachability for SMS.

4. The method of claim 3, wherein:
i) if the first subscription is configured to indicate the UE reachability event shall be reported via the first network node, the second subscription is configured to at least comprise an address of the first network node, an indicator for indicating a type of the UE reachability event and an indicator for indicating the UE reachability event shall be only reported via the first network node; or
ii) if the first subscription is configured to indicate the UE reachability event shall be reported via the second network node, the second subscription is configured to comprise an indicator for indicating the UE reachability event shall be reported via the second network node; or
iii) if the first subscription is configured to indicate the UE reachability event shall be reported by the first network node, the step of sending the second subscription comprises:
if there is an AMF node registered in the first network node, sending the second subscription to the AMF node registered in the first network node; and optionally,
wherein the step of sending the first UE reachability report comprises:
in response to a UECM request or an event exposure notification that UE activity is detected, which is received from the AMF node registered in the first network node, sending the first UE reachability report to the event subscriber.

5. The method of claim 3, wherein:
i) if the first subscription is configured to indicate the UE reachability event shall be reported by the first network node, the step of sending the second subscription comprises:
if there is no AMF node registered in the first network node, storing the first subscription at the first network node, and
in response to a UECM request or an event exposure notification that UE activity is detected, which is received from an AMF node, sending the second subscription to the AMF node; or
ii) the UE reachability for SMS comprises UE reachability for SMS over NAS and UE reachability for SMS over IP; or
iii) the first subscription is configured to further indicate the UE reachability for SMS is the SMS over IP, and the step of sending the first UE reachability report comprises:
in response to the occurrence of the UE reachability event detected at the first network node or reported by the second network node, determining whether the SMS over NAS is available;
configuring the first UE reachability report to indicate whether the SMS over NAS is available; and, optionally,
wherein the first UE reachability report is configured to further indicate in which domain the occurrence of the UE reachability event is detected.

6. The method of claim 2 or 3, further comprising:
setting a UE reachability request parameter to make the second network node to report the occurrence of the UE reachability event in one of the following modes: one-time UE reachability event reporting, continuous UE reachability event reporting and periodic UE reachability event reporting.

7. A method implemented by a second network node in a wireless communication system, comprising:
receiving, from a first network node, a second subscription for subscribing to a UE reachability event, wherein the second subscription is configured to indicate the UE reachability event shall be reported to an event subscriber via the first network node or the second network node on the basis of a first subscription received from the event subscriber by the first network node;
determining whether the UE reachability event occurs on the basis of UE activity; and
if the second subscription is configured to indicate the UE reachability event shall be reported to the event subscriber via the first network node, notifying the first network node of the occurrence of the UE reachability event, otherwise, notifying the event subscriber of the occurrence of the UE reachability event.

8. The method of claim 7, wherein:
i) the first network node is implemented by a UDM node, the second network node is implemented by an AMF node or an HSS node, and the event subscriber is implemented by one selected from a group consisting of a GMLC node, an IP-SM-GW node, an EF node and an AF node; and/or
ii) the UE reachability event comprises at least one of an event on UE reachability for data and an event on UE reachability for SMS; and, optionally, wherein:
ii.a) the step of determining whether the UE reachability event occurs is performed by detecting at least one selected from a group consisting of NAS signaling from a UE, UE notification, a path switch request from NG-RAN and an IMSI/PEI change from a UE; or
ii.b) the step of notifying the first network node of the occurrence of the UE reachability event is performed by sending either a UECM request or an event exposure notification to the first network node; or
ii.c) further comprising:
setting a UE reachability request parameter to make the second network node to report the occurrence of the UE reachability event in one of the following modes: one-time UE reachability event reporting, continuous UE reachability event reporting and periodic UE reachability event reporting.

9. A method implemented by an event subscriber in a wireless communication system, comprising:
sending a first subscription for subscribing to a UE reachability event to a first network node, wherein the first subscription is configured to indicate the UE reachability event shall be reported to the event subscriber via the first network node or a second network node;
receiving either a first UE reachability report that the UE reachability event occurs from the first network node, or a second UE reachability report that the UE reachability event occurs from the second network node.

10. The method of claim 9, wherein the first network node is implemented by a UDM node, the second network node is implemented by an AMF node or an HSS node, and the event subscriber is implemented by one selected from a group consisting of a GMLC node, an IP-SM-GW node, an EF node and an AF node.

11. The method of claim 9 or 10, wherein the UE reachability event comprises at least one of an event on UE reachability for data and an event on UE reachability for SMS; and, optionally, wherein
the UE reachability for SMS comprises UE reachability for SMS over NAS and UE reachability for SMS over IP; and, further optionally,
wherein the first subscription is configured to further indicate the UE reachability for SMS is the SMS over IP, the first UE reachability report is configured to indicated whether the SMS over NAS is available, and, further optionally,
wherein
i) the first UE reachability report is configured to further indicate in which domain the occurrence of the UE reachability event is detected; and/or
ii) further comprising:
determining a SMS delivery policy on the basis of indication on whether the SMS over NAS is available in the first UE reachability report.

12. A first network node in a wireless communication system, comprising:
a storage device configured to store a computer program comprising computer instructions; and
a processor coupled to the storage device and configured to execute the computer instructions to carry out the steps of anyone of claims 1-6.

13. A second network node in a wireless communication system, comprising:
a storage device configured to store a computer program comprising computer instructions; and
a processor coupled to the storage device and configured to execute the computer instructions to carry out the steps of anyone of claims 7-8.

14. An event subscriber in a wireless communication system, comprising:
a storage device configured to store a computer program comprising computer instructions; and
a processor coupled to the storage device and configured to execute the computer instructions to carry out the steps of anyone of claims 9-11.

15. A non-transitory computer readable medium having a computer program stored thereon which, when executed by a set of one or more processors of a network node in a wireless communication system, causes the network node to perform operations of the method of any of claims 1 to 11.

## Patentansprüche

1. Verfahren, das von einem ersten Netzwerkknoten in einem drahtlosen Kommunikationssystem implementiert wird und Folgendes umfasst:
Empfangen eines ersten Abonnements zum Abonnieren eines UE-Erreichbarkeitsereignisses von einem Ereignisabonnenten, wobei das erste Abonnement so konfiguriert ist, dass es angibt, dass das UE-Erreichbarkeitsereignis dem Ereignisabonnenten über den ersten Netzwerkknoten oder einen zweiten Netzwerkknoten gemeldet werden soll;
Senden eines zweiten Abonnements zum Abonnieren des UE-Erreichbarkeitsereignisses, das basierend auf dem ersten Abonnement konfiguriert ist, an den zweiten Netzwerkknoten; und,
falls das erste Abonnement so konfiguriert ist, dass es angibt, dass das UE-Erreichbarkeitsereignis über den ersten Netzwerkknoten gemeldet werden soll, Senden einer ersten UE-Erreichbarkeitsmeldung, dass das UE-Erreichbarkeitsereignis eintritt, in Reaktion auf das Eintreten des UE-Erreichbarkeitsereignisses, das an dem ersten Netzwerkknoten erkannt oder vom zweiten Netzwerkknoten gemeldet wird, an den Ereignisabonnenten.

2. Verfahren nach Anspruch 1, wobei der erste Netzwerkknoten durch einen UDM-Knoten implementiert wird, der zweite Netzwerkknoten durch einen AMF-Knoten oder einen HSS-Knoten implementiert wird und der Ereignisabonnent durch einen Knoten implementiert wird, der aus einem GMLC-Knoten, einem IP-SM-GW-Knoten, einem EF-Knoten und einem AF-Knoten ausgewählt wird.

3. Verfahren nach Anspruch 1 oder 2, wobei das UE-Erreichbarkeitsereignis mindestens eines von einem Ereignis hinsichtlich UE-Erreichbarkeit für Daten und einem Ereignis hinsichtlich UE-Erreichbarkeit für SMS umfasst.

4. Verfahren nach Anspruch 3, wobei:
i) falls das erste Abonnement so konfiguriert ist, dass es angibt, dass das UE-Erreichbarkeitsereignis über den ersten Netzwerkknoten gemeldet werden soll, das zweite Abonnement so konfiguriert ist, dass es mindestens eine Adresse des ersten Netzwerkknotens, einen Indikator zum Angeben einer Art des UE-Erreichbarkeitsereignisses und einen Indikator zum Angeben umfasst, dass das UE-Erreichbarkeitsereignis nur über den ersten Netzwerkknoten gemeldet werden soll; oder
ii) falls das erste Abonnement so konfiguriert ist, dass es angibt, dass das UE-Erreichbarkeitsereignis über den zweiten Netzwerkknoten gemeldet werden soll, das zweite Abonnement so konfiguriert ist, dass es einen Indikator zum Angeben umfasst, dass das UE-Erreichbarkeitsereignis über den zweiten Netzwerkknoten gemeldet werden soll; oder
iii) falls das erste Abonnement so konfiguriert ist, dass es angibt, dass das UE-Erreichbarkeitsereignis durch den ersten Netzwerkknoten gemeldet werden soll, der Schritt des Sendens des zweiten Abonnements Folgendes umfasst:
falls es einen AMF-Knoten gibt, der im ersten Netzwerkknoten registriert ist, Senden des zweiten Abonnements an den AMF-Knoten, der im ersten Netzwerkknoten registriert ist, und optional
wobei der Schritt des Sendens der ersten UE-Erreichbarkeitsmeldung Folgendes umfasst:
in Reaktion auf eine UECM-Anforderung oder eine Ereignisdarlegungsbenachrichtigung, dass UE-Aktivität erkannt wird, die von dem AMF-Knoten empfangen wird, der im ersten Netzwerkknoten registriert ist, Senden der ersten UE-Erreichbarkeitsmeldung an den Ereignisabonnenten.

5. Verfahren nach Anspruch 3, wobei:
i) falls das erste Abonnement so konfiguriert ist, dass es angibt, dass das UE-Erreichbarkeitsereignis durch den ersten Netzwerkknoten gemeldet werden soll, der Schritt des Sendens des zweiten Abonnements Folgendes umfasst:
falls es keinen AMF-Knoten gibt, der im ersten Netzwerkknoten registriert ist, Speichern des ersten Abonnements am ersten Netzwerkknoten, und
in Reaktion auf eine UECM-Anforderung oder eine Ereignisdarlegungsbenachrichtigung, dass UE-Aktivität erkannt wird, die von einem AMF-Knoten empfangen wird, Senden des zweiten Abonnements an den AMF-Knoten; oder
ii) die UE-Erreichbarkeit für SMS UE-Erreichbarkeit für SMS über NAS und UE-Erreichbarkeit für SMS über IP umfasst; oder
iii) das erste Abonnement so konfiguriert ist, dass es angibt, dass die UE-Erreichbarkeit für SMS für SMS über IP ist, und der Schritt des Sendens der ersten UE-Erreichbarkeitsmeldung Folgendes umfasst:
in Reaktion darauf, dass das Eintreten des UE-Erreichbarkeitsereignisses am ersten Netzwerkknoten erkannt oder durch den zweiten Netzwerkknoten gemeldet wird, Bestimmen, ob SMS über NAS verfügbar ist;
Konfigurieren der ersten UE-Erreichbarkeitsmeldung so, dass sie angibt, ob SMS über NAS verfügbar ist; und optional
wobei die erste UE-Erreichbarkeitsmeldung so konfiguriert wird, dass sie ferner angibt, in welcher Domäne das Eintreten des UE-Erreichbarkeitsereignisses erkannt wird.

6. Verfahren nach Anspruch 2 oder 3, ferner umfassend:
Festlegen eines UE-Erreichbarkeitsanforderungsparameters, um den zweiten Netzwerkknoten zu veranlassen, das Eintreten des UE-Erreichbarkeitsereignisses in einem der folgenden Modi zu melden: einmalige UE-Erreichbarkeitsereignismeldung, kontinuierliche UE-Erreichbarkeitsereignismeldung und periodische UE-Erreichbarkeitsereignismeldung.

7. Verfahren, das von einem zweiten Netzwerkknotens in einem drahtlosen Kommunikationssystem implementiert wird und Folgendes umfasst:
Empfangen eines zweiten Abonnements zum Abonnieren eines UE-Erreichbarkeitsereignisses von einem ersten Netzwerkknoten, wobei das zweite Abonnement so konfiguriert ist, dass es angibt, dass das UE-Erreichbarkeitsereignis einem Ereignisabonnenten basierend auf einem ersten Abonnement, das durch den ersten Netzwerkknoten von dem Ereignisabonnenten empfangen wird, über den ersten Netzwerkknoten oder den zweiten Netzwerkknoten gemeldet werden soll;
Bestimmen, ob das UE-Erreichbarkeitsereignis eintritt, basierend auf UE-Aktivität; und,
falls das zweite Abonnement so konfiguriert ist, dass es angibt, dass das UE-Erreichbarkeitsereignis über den ersten Netzwerkknoten gemeldet werden soll, Benachrichtigen des ersten Netzwerkknotens von dem Eintreten des UE-Erreichbarkeitsereignisses, andernfalls Benachrichtigen des Ereignisabonnenten von dem Eintreten des UE-Erreichbarkeitsereignisses.

8. Verfahren nach Anspruch 7, wobei:
i) der erste Netzwerkknoten durch einen UDM-Knoten implementiert wird, der zweite Knoten durch einen AMF-Knoten oder einen HSS-Knoten implementiert wird und der Ereignisabonnent durch einen Knoten implementiert wird, der aus einem GMLC-Knoten, einem IP-SM-GW-Knoten, einem EF-Knoten und einem AF-Knoten ausgewählt wird; und/oder
ii) das UE-Erreichbarkeitsereignis mindestens eines von einem Ereignis hinsichtlich UE-Erreichbarkeit für Daten und einem Ereignis hinsichtlich UE-Erreichbarkeit für SMS umfasst; und wobei optional:
ii.a) der Schritt des Bestimmens, ob das UE-Erreichbarkeitsereignis eintritt, ausgeführt wird, indem mindestens ein Ausgewähltes aus einer Gruppe bestehend aus NAS-Signalisierung von einer UE, einer UE-Benachrichtigung, einer Pfadwechselanforderung vom NG-RAN und einer IMSI/PEI-Änderung von einer UE erkannt wird; oder
ii.b) der Schritt des Benachrichtigens des ersten Netzwerkknotens von dem Eintreten des UE-Erreichbarkeitsereignisses ausgeführt wird, indem entweder eine UECM-Anforderung oder eine Ereignisdarlegungsbenachrichtigung an den ersten Netzwerkknoten gesendet wird; oder
ii.c) ferner umfassend:
Festlegen eines UE-Erreichbarkeitsanforderungsparameters, um den zweiten Netzwerkknoten zu veranlassen, das Eintreten des UE-Erreichbarkeitsereignisses in einem der folgenden Modi zu melden: einmalige UE-Erreichbarkeitsereignismeldung, kontinuierliche UE-Erreichbarkeitsereignismeldung und periodische UE-Erreichbarkeitsereignismeldung.

9. Verfahren, das von einem Ereignisabonnenten in einem drahtlosen Kommunikationssystem implementiert wird und Folgendes umfasst:
Senden eines ersten Abonnements zum Abonnieren eines UE-Erreichbarkeitsereignisses an einen ersten Netzwerkknoten, wobei das erste Abonnement so konfiguriert ist, dass es angibt, dass das UE-Erreichbarkeitsereignis dem Ereignisabonnenten über den ersten Netzwerkknoten oder eine zweiten Netzwerkknoten gemeldet werden soll;
Empfangen entweder einer ersten UE-Erreichbarkeitsmeldung, dass das UE-Erreichbarkeitsereignis eintritt, von dem ersten Netzwerkknoten oder einer zweiten UE-Erreichbarkeitsmeldung, dass das UE-Erreichbarkeitsereignis eintritt, von dem zweiten Netzwerkknoten.

10. Verfahren nach Anspruch 9, wobei der erste Netzwerkknoten durch einen UDM-Knoten implementiert wird, der zweite Knoten durch einen AMF-Knoten oder einen HSS-Knoten implementiert wird und der Ereignisabonnent durch einen Knoten implementiert wird, der aus einem GMLC-Knoten, einem IP-SM-GW-Knoten, einem EF-Knoten und einem AF-Knoten ausgewählt wird.

11. Verfahren nach Anspruch 9 oder 10, wobei das UE-Erreichbarkeitsereignis mindestens eines von einem Ereignis hinsichtlich UE-Erreichbarkeit für Daten und einem Ereignis hinsichtlich UE-Erreichbarkeit für SMS umfasst; und wobei optional:
die UE-Erreichbarkeit für SMS UE-Erreichbarkeit für SMS über NAS und UE-Erreichbarkeit für SMS über IP umfasst; und ferner optional
wobei das Abonnement so konfiguriert ist, dass es ferner angibt, dass die UE-Erreichbarkeit für SMS für SMS über IP ist, wobei die erste UE-Erreichbarkeitsmeldung so konfiguriert ist, dass sie angibt, ob SMS über NAS verfügbar ist, und ferner optional
wobei
i) die erste UE-Erreichbarkeitsmeldung so konfiguriert wird, dass sie ferner angibt, in welcher Domäne das Eintreten des UE-Erreichbarkeitsereignisses erkannt wird; und/oder
ii) ferner umfassend:
Bestimmen einer SMS-Zustellungsrichtlinie basierend auf der Angabe dessen, ob SMS über NAS verfügbar ist, in der ersten UE-Erreichbarkeitsmeldung.

12. Erster Netzwerkknoten in einem drahtlosen Kommunikationssystem, umfassend:
eine Speichervorrichtung, die zum Speichern eines Computerprogramms konfiguriert ist, das Computeranweisungen umfasst; und
einen Prozessor, der mit der Speichervorrichtung gekoppelt und so konfiguriert ist, dass er die Computeranweisungen ausführt, um die Schritte nach einem der Ansprüche 1-6 auszuführen.

13. Zweiter Netzwerkknoten in einem drahtlosen Kommunikationssystem, umfassend:
eine Speichervorrichtung, die zum Speichern eines Computerprogramms konfiguriert ist, das Computeranweisungen umfasst; und
einen Prozessor, der mit der Speichervorrichtung gekoppelt und so konfiguriert ist, dass er die Computeranweisungen ausführt, um die Schritte nach einem der Ansprüche 7-8 auszuführen.

14. Ereignisabonnent der in einem drahtlosen Kommunikationssystem, umfassend:
eine Speichervorrichtung, die zum Speichern eines Computerprogramms konfiguriert ist, das Computeranweisungen umfasst; und
einen Prozessor, der mit der Speichervorrichtung gekoppelt und so konfiguriert ist, dass er die Computeranweisungen ausführt, um die Schritte nach einem der Ansprüche 9-11 auszuführen.

15. Nicht-transitorisches, computerlesbares Medium mit einem darauf gespeichertem Computerprogramm, das bei Ausführung durch einen Satz eines oder mehrerer Prozessoren eines Netzwerkknotens in einem drahtlosen Kommunikationssystem den Netzwerkknoten zum Durchführen von Operationen des Verfahrens nach einem der Ansprüche 1-11 veranlasst.

## Revendications

1. Procédé mis en œuvre par un premier nœud de réseau dans un système de communication sans fil, comprenant :
la réception d'un premier abonnement pour s'abonner à un événement d'accessibilité d'UE depuis un abonné d'événement, dans lequel le premier abonnement est configuré pour indiquer que l'événement d'accessibilité d'UE doit être rapporté à l'abonné d'événement via le premier nœud de réseau ou un deuxième nœud de réseau ;
l'envoi, au deuxième nœud de réseau, d'un deuxième abonnement pour s'abonner à l'événement d'accessibilité d'UE, qui est configuré sur la base du premier abonnement ; et
si le premier abonnement est configuré pour indiquer que l'événement d'accessibilité d'UE doit être rapporté via le premier nœud de réseau, l'envoi, à l'abonné d'événement, d'un premier rapport d'accessibilité d'UE indiquant que l'événement d'accessibilité d'UE survient en réponse à l'occurrence de l'événement d'accessibilité d'UE détecté au niveau du premier nœud de réseau ou rapporté par le deuxième nœud de réseau.

2. Procédé selon la revendication 1, dans lequel le premier nœud de réseau est mis en œuvre par un nœud UDM, le deuxième nœud de réseau est mis en œuvre par un nœud AMF ou un nœud HSS, et l'abonné d'événement est mis en œuvre par l'un sélectionné dans un groupe se composant d'un nœud GMLC, un nœud IP-SM-GW, un nœud EF et un nœud AF.

3. Procédé selon la revendication 1 ou 2, dans lequel l'événement d'accessibilité d'UE comprend au moins l'un parmi un événement d'accessibilité d'UE pour des données et un événement d'accessibilité d'UE pour un SMS.

4. Procédé selon la revendication 3, dans lequel :
i) si le premier abonnement est configuré pour indiquer que l'événement d'accessibilité d'UE doit être rapporté via le premier nœud de réseau, le deuxième abonnement est configuré pour au moins comprendre une adresse du premier nœud de réseau, un indicateur pour indiquer un type de l'événement d'accessibilité d'UE et un indicateur pour indiquer que l'événement d'accessibilité d'UE ne doit être rapporté que via le premier nœud de réseau ; ou
ii) si le premier abonnement est configuré pour indiquer que l'événement d'accessibilité d'UE doit être rapporté via le deuxième nœud de réseau, le deuxième abonnement est configuré pour comprendre un indicateur pour indiquer que l'événement d'accessibilité d'UE doit être rapporté via le deuxième nœud de réseau ; ou
iii) si le premier abonnement est configuré pour indiquer que l'événement d'accessibilité d'UE doit être rapporté par le premier nœud de réseau, l'étape d'envoi du deuxième abonnement comprend :
s'il existe un nœud AMF enregistré dans le premier nœud de réseau, l'envoi du deuxième abonnement au nœud AMF enregistré dans le premier nœud de réseau ; et facultativement
dans lequel l'étape d'envoi du premier rapport d'accessibilité d'UE comprend :
en réponse à une demande UECM ou à une notification d'exposition d'événement qu'une activité d'UE est détectée, qui est reçue depuis le nœud AMF enregistré dans le premier nœud de réseau, l'envoi du premier rapport d'accessibilité d'UE à l'abonné d'événement.

5. Procédé selon la revendication 3, dans lequel :
i) si le premier abonnement est configuré pour indiquer que l'événement d'accessibilité d'UE doit être rapporté par le premier nœud de réseau, l'étape d'envoi du deuxième abonnement comprend :
s'il n'existe pas de nœud AMF enregistré dans le premier nœud de réseau, le stockage du premier abonnement au niveau du premier nœud de réseau, et
en réponse à une demande UECM ou à une notification d'exposition d'événement qu'une activité d'UE est détectée, qui est reçue depuis un nœud AMF, l'envoi du deuxième abonnement au nœud AMF ; ou
ii) l'accessibilité d'UE pour un SMS comprend l'accessibilité d'UE pour un SMS sur NAS et l'accessibilité d'UE pour un SMS sur IP ; ou
iii) le premier abonnement est configuré pour indiquer en outre que l'accessibilité d'UE pour un SMS est le SMS sur IP, et l'étape d'envoi du premier rapport d'accessibilité d'UE comprend :
en réponse à l'occurrence de l'événement d'accessibilité d'UE détecté au niveau du premier nœud de réseau ou rapporté par le deuxième nœud de réseau, la détermination si le SMS sur NAS est disponible ;
la configuration du premier rapport d'accessibilité d'UE pour indiquer si le SMS sur NAS est disponible ; et facultativement
dans lequel le premier rapport d'accessibilité d'UE est configuré pour indiquer en outre dans quel domaine l'occurrence de l'événement d'accessibilité d'UE est détectée.

6. Procédé selon la revendication 2 ou 3, comprenant en outre :
le réglage d'un paramètre de demande d'accessibilité d'UE pour amener le deuxième nœud de réseau à rapporter l'occurrence de l'événement d'accessibilité d'UE dans l'un des modes suivants : le rapport d'événement d'accessibilité d'UE une seule fois, le rapport d'événement d'accessibilité d'UE en continu, et le rapport d'événement d'accessibilité d'UE de manière périodique.

7. Procédé mis en œuvre par un deuxième nœud de réseau dans un système de communication sans fil, comprenant :
la réception, depuis un premier nœud de réseau, d'un deuxième abonnement pour s'abonner à un événement d'accessibilité d'UE, dans lequel le deuxième abonnement est configuré pour indiquer que l'événement d'accessibilité d'UE doit être rapporté à un abonné d'événement via le premier nœud de réseau ou le deuxième nœud de réseau sur la base d'un premier abonnement reçu depuis l'abonné d'événement par le premier nœud de réseau ;
la détermination si l'événement d'accessibilité d'UE survient sur la base d'une activité d'UE ; et
si le deuxième abonnement est configuré pour indiquer que l'événement d'accessibilité d'UE doit être rapporté à l'abonné d'événement via le premier nœud de réseau, la notification, au premier nœud de réseau, de l'occurrence de l'événement d'accessibilité d'UE, sinon la notification, à l'abonné d'événement, de l'occurrence de l'événement d'accessibilité d'UE.

8. Procédé selon la revendication 7, dans lequel :
i) le premier nœud de réseau est mis en œuvre par un nœud UDM, le deuxième nœud de réseau est mis en œuvre par un nœud AMF ou un nœud HSS, et l'abonné d'événement est mis en œuvre par l'un sélectionné dans un groupe se composant d'un nœud GMLC, un nœud IP-SM-GW, un nœud EF et un nœud AF ; et/ou
ii) l'événement d'accessibilité d'UE comprend au moins l'un parmi un événement d'accessibilité d'UE pour des données et un événement d'accessibilité d'UE pour un SMS ; et facultativement dans lequel :
ii.a) l'étape de détermination si l'événement d'accessibilité d'UE survient est réalisée par la détection d'au moins l'une sélectionnée dans un groupe se composant d'une signalisation de NAS depuis un UE, une notification d'UE, une demande de commutation de trajet depuis NG-RAN, et une modification IMSI/PEI depuis un UE ; ou
ii.b) l'étape de notification, au premier nœud de réseau, de l'occurrence de l'événement d'accessibilité d'UE est réalisée par l'envoi d'une demande UECM ou d'une notification d'exposition d'événement au premier nœud de réseau ; ou
ii.c) comprenant en outre :
le réglage d'un paramètre de demande d'accessibilité d'UE pour amener le deuxième nœud de réseau à rapporter l'occurrence de l'événement d'accessibilité d'UE dans l'un des modes suivants : le rapport d'événement d'accessibilité d'UE une seule fois, le rapport d'événement d'accessibilité d'UE en continu, et le rapport d'événement d'accessibilité d'UE de manière périodique.

9. Procédé mis en œuvre par un abonné d'événement dans un système de communication sans fil, comprenant :
l'envoi d'un premier abonnement pour s'abonner à un événement d'accessibilité d'UE à un premier nœud de réseau, dans lequel le premier abonnement est configuré pour indiquer que l'événement d'accessibilité d'UE doit être rapporté à l'abonné d'événement via le premier nœud de réseau ou un deuxième nœud de réseau ;
la réception soit d'un premier rapport d'accessibilité d'UE indiquant que l'événement d'accessibilité d'UE survient depuis le premier nœud de réseau, soit d'un deuxième rapport d'accessibilité d'UE indiquant que l'événement d'accessibilité d'UE survient depuis le deuxième nœud de réseau.

10. Procédé selon la revendication 9, dans lequel le premier nœud de réseau est mis en œuvre par un nœud UDM, le deuxième nœud de réseau est mis en œuvre par un nœud AMF ou un nœud HSS, et l'abonné d'événement est mis en œuvre par l'un sélectionné dans un groupe se composant d'un nœud GMLC, un nœud IP-SM-GW, un nœud EF et un nœud AF.

11. Procédé selon la revendication 9 ou 10, dans lequel l'événement d'accessibilité d'UE comprend au moins l'un parmi un événement d'accessibilité d'UE pour des données et un événement d'accessibilité d'UE pour un SMS ; et facultativement dans lequel
l'accessibilité d'UE pour un SMS comprend l'accessibilité d'UE pour un SMS sur NAS et l'accessibilité d'UE pour un SMS sur IP ; et en outre facultativement
dans lequel le premier abonnement est configuré pour indiquer en outre que l'accessibilité d'UE pour un SMS est le SMS sur IP, le premier rapport d'accessibilité d'UE est configuré pour indiquer si le SMS sur NAS est disponible, et en outre facultativement
dans lequel
i) le premier rapport d'accessibilité d'UE est configuré pour indiquer en outre dans quel domaine l'occurrence de l'événement d'accessibilité d'UE est détectée ; et/ou
ii) comprenant en outre :
la détermination d'une politique de distribution de SMS sur la base d'une indication indiquant si le SMS sur NAS est disponible dans le premier rapport d'accessibilité d'UE.

12. Premier nœud de réseau dans un système de communication sans fil, comprenant :
un dispositif de stockage configuré pour stocker un programme informatique comprenant des instructions informatiques ; et
un processeur couplé au dispositif de stockage et configuré pour exécuter les instructions informatiques pour réaliser les étapes selon l'une quelconque des revendications 1 à 6.

13. Deuxième nœud de réseau dans un système de communication sans fil, comprenant :
un dispositif de stockage configuré pour stocker un programme informatique comprenant des instructions informatiques ; et
un processeur couplé au dispositif de stockage et configuré pour exécuter les instructions informatiques pour réaliser les étapes selon l'une quelconque des revendications 7 et 8.

14. Abonné d'événement dans un système de communication sans fil, comprenant :
un dispositif de stockage configuré pour stocker un programme informatique comprenant des instructions informatiques ; et
un processeur couplé au dispositif de stockage et configuré pour exécuter les instructions informatiques pour réaliser les étapes selon l'une quelconque des revendications 9 à 11.

15. Support non transitoire lisible par ordinateur sur lequel est stocké un programme informatique qui, lorsqu'il est exécuté par un ensemble d'un ou plusieurs processeurs d'un nœud de réseau dans un système de communication sans fil, amène le nœud de réseau à réaliser des opérations du procédé selon l'une quelconque des revendications 1 à 11.
